# EUROPEAN PATENT SPECIFICATION

(11) **EP 2 942 193 B1**
(45) Date of publication and mention of the grant of the patent: **17.10.2018**
(21) Application number: 14167335.0
(22) Date of filing: 07.05.2014
(51) Int. Cl.: B32B 19/02, B32B 19/04, B32B 19/06, B32B 27/06, B32B 27/12, C09B 31/04, C09K 21/00, E04B 1/94, B32B 5/18, B32B 5/02, B32B 5/24

(54) **Fire retardant insulation material**
Feuerhemmendes Isoliermaterial
Matériau d'isolation ignifuge

(43) Date of publication of application: 11.11.2015
(73) Proprietor: Kaimann GmbH, 33161 Hövelhof (DE)
(72) Inventor: Kaimann, Georg J., 33161 Hövelhof (DE); Springub, Ralf, 48167 Münster (DE); Weidinger, Jürgen, 33102 Paderborn (DE)
(74) Representative: Hoffmann Eitle

(56) References cited:
- EP-A1- 2 060 602
- EP-A1- 2 351 891
- EP-A1- 2 457 723
- EP-A1- 2 650 118
- EP-A2- 0 832 735
- WO-A2-2006/083348
- GB-A- 2 052 305
- US-A- 3 915 777
- US-A- 5 458 966

## Description

### Field of the Invention

The present invention relates to a multi-layer material comprising expanded elastomer or thermoplastic elastomer thermal and/or sound insulation exhibiting high fire retardancy combined with significantly low smoke generation, the process for manufacturing of such material and the use of such material.

### Technical Background

Expanded elastomers or thermoplastic elastomers are known for their versatility in application, as they are easy to apply and adapt. However, they are organic, thus combustible materials, and the cell gas being air even increases their flammability, as the oxygen for combustion is available at any time during burn.

Nevertheless, the manufacturers of expanded elastomeric products have always tried to improve fire retardancy, such as by intrinsic flame protection using flame retardants in the formulation, and/or by applying protective materials on or around the foam. Basically, trying to insulate or shield the combustible organic material from fire or heat is an appropriate measure, such as by intumescent and/or char forming ingredients. Various combinations had been tried, such as in JP 2003055622 A and JP 11293894 A, where foils together with intumescent systems are used, or in DE 102006055377 A1 and DE 19809973 Cl where fibres or foils are applied on intumescent layers. These combinations, however, show some drawbacks, such as inappropriate integrity of the composite in case of prolonged heat exposure time (breakthrough of flame or combustible gases) and/or remarkably high smoke creation due to supressed burn of parts of the system (lack of oxygen leading to particles - such as soot- being created). Some other combinations and systems have been focussing on complete shielding rather than prolongation of fire resistance: GB 2311235 A describes a wrap of intumescent epoxy resin for cable tray protection, optionally equipped with mesh for stabilization. CN 103088643 A and CN 102911566 A both mention a flame protected textile by means of intumescence, by intumescent phosphate and smoke suppression molybdenum formulations. US 2005/025890 A1 is using an impregnation coating on or in a nonwoven, whereas US 2005/0031843 A1 discloses a multi-layered fire barrier also being based on intumescence effects, but comprising rigid silicate resin.

All a.m. systems and measurements have in common that -apart from remarkable smoke creation due to supressed burn- they exhibit low to no flexibility and are not or not easily applicable on flexible thermal or sound insulation material.

Regulations concerning fire safety and protection become more and more global, and they get more severe e.g. in testing conditions and evaluation. Older fire test standards have put a major or the only focus on flammability, such as DIN 4102 (Germany), NF FEU 487 (France), whereas some traditional (such as ASTM E-84/U.S.A.) and especially more recent standards also take into regard that smoke is the more dangerous issue in case of burns of buildings, see e.g. EN 13823 (EU): smoke density and total smoke creation are detected in parallel to fire propagation and/or heat release. And some standards, like GB 6824 (China) or EN 45545 (railways, EU) even measure the toxicity of emissions. WO 2006/083348 seeks to improve the ASTM E-84 flame spread index and smoke developed index ratings of polyisocyanurate or urethane-modified isocyanurate foams by coating one or both major planar surfaces of a foam body or board with an intumescent coating material that contains expandable graphite and a silicate. If desired, provide reinforcement for the intumescent coating when it intumesces using a material such as a carbon veil mat or a fiberglass mat. A moisture vapor barrier layer may be added to minimize water-induced degradation or water absorption of the foam. EP 2 351 891 relates to an insulation material for thermal and sound insulation with high mechanical strength, thus providing structural integrity from its own, and its composites with other building materials, such as concrete, for providing pre-insulated building elements, the manufacturing of such material and its composites and the use thereof. US 3,915,777 seeks to protect a surface from fire and excessive heat by coating it with (1) a protective composition comprising an intumescent paint and glass fibers and (2) a protective layer comprising a flexible, surface-conformable fabric sheet (e.g., a textile fabric) having sufficient strength and permeability to unite with a paint applied therewith, and, optionally, an overcoating of intumescent paint. EP2 457 723 relates to an organic composite for thermal and/ or acoustic insulation comprising an expanded polymer (A) protected against fire by a high strength polymeric flame retardant layer (B), the process for manufacturing of such composite, and the use of such composite.

### Problem to be solved by the Invention

As most of a.m. prior art is not suitable to safely reach both high level flame retardancy as well as low smoke emission in combination with good insulation properties it is a major target of the present invention to cover both requirements without compromising other beneficial properties of elastomeric foams, such as flexibility, safe and easy mounting, balancing tolerances etc. Additionally, ensuring low toxicity of smoke emissions is another aim of the present invention.

A major object of the present invention thus is to provide a fire protected elastomeric material (composite) not showing the a.m. disadvantages, but providing sufficient flexibility, easy shaping, and a polymer based outer surface together with high fire resistance and low smoke creation in case of burn.

### Disclosure of the Invention

Surprisingly, it is found that such material can be obtained when applying an at least three-layered covering on an expanded elastomer. The covering comprises two intumescent and/or char forming layers of identical or different composition and a scrim in between said layers. The layers can be connected to each other and to the expanded elastomer by chemical bonding, either by adhesives or by crosslinking (vulcanisation).

Accordingly, the present invention provides a material comprising at least four layers (A), (B), (C) and (D) in this order, wherein the first (outer) layer (A) has a thickness of 0.1 to 5 mm, preferably 0.2 to 3 mm, especially preferred 0.4 to 1.5 mm and comprises:
- at least 10 weight percent, preferably at least 20 weight percent of at least one of an elastomer, a thermoplastic elastomer and a thermoplastic polymer; and
- at least 30 weight percent, preferably at least 50 weight percent of at least one intumescent agent;
the second layer (B) comprises at least one scrim layer of fibrous material in woven or nonwoven form, preferably woven (fabric), acting as a reinforcement and interface between layer (A) and the subsequent layer (C);
the third layer (C) has a thickness of 0.1 to 5 mm, preferably 0.2 to 3 mm, especially preferred 0.4 to 1.5 mm, and comprises:
- at least one of an elastomer, a thermoplastic elastomer and a thermoplastic polymer and at least one of an intumescent agent and a char forming agent; or
- a binder and a char forming agent; and
the fourth (inner) layer (D) is comprised of an elastomer or thermoplastic elastomer being expanded to a closed or open cell foam or sponge showing density of less than 300 kg/m3, preferably less than 200 kg/m3, especially preferred less than 150 kg/m3 according to ISO 845, and with a thermal conductivity of less than 0.100 W/m*K at 0 °C, preferably less than 0.050 W/m*K at 0 °C according to EN 12667.

### Brief Description of the Drawing

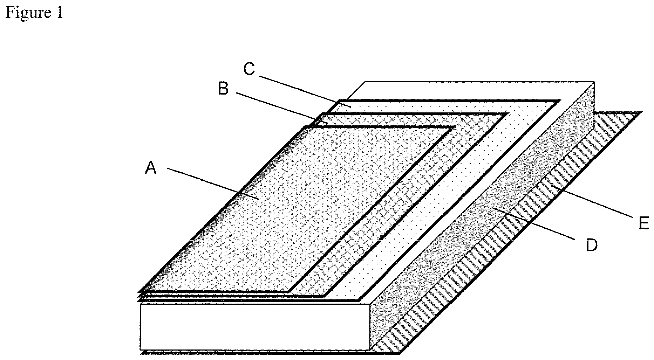

Figure 1 is a schematic illustration of an embodiment of the present invention.

### Detailed Description of the Invention

The claimed material comprises at least one layer (A), see fig. 1, which is the outermost and at least one polymer based layer. Layer (A) comprises at least 10 weight percent, preferably at least 20 weight percent of polymer of elastomeric and/or thermoplastic elastomer and/or thermoplastic nature. Layer (A) furthermore comprises at least 30 weight percent, preferably at least 50 weight percent of at least one intumescent agent. The intumescent agent shows an expansion or gas potential of at least 20 ml/g, preferably at least 50 ml/g, especially preferred at least 75 ml/g. The particle size of the intumescent agent is at least 10 micron, preferably at least 30 micron, especially preferred at least 50 micron (volume average, as determined by laser diffraction). The maximum expansion velocity of the intumescent agent is found at temperatures of 180°C or higher. The expansion ratio after 30 seconds at 280°C is at least 3:1 (means e.g. 3 mm if the initial thickness had been 1 mm), preferably at least 6:1.

The expansion pressure of layer (A) is generally in a range of 0.3 to 4 N/mm², preferably 0.5 to 3 N/mm², especially preferred 1.0 to 2.5 N/mm² at 300 °C. The total expansion of layer (A) after 30 min at 300 °C with a load of 5 g/cm² is 3 to 65 mm, preferably 5 to 50 mm, especially preferred 10 to 40 mm. These expansion properties may be determined by usual measures, as e.g., described in "Zulassungsgrundsätze für Bauprodukte, die als dammschichtbildende Baustoffe in Bauteilen und Bauarten zur Anwendung kommen", Edition of December 2013, issued by the DIBt (German Institute for Construction Engineering).

The polymer of layer (A) can be crosslinked or not crosslinked and may be typically comprised of, but not limited to ACM/AEM, AU/EU, BR, BIIR, CIIR, CM/CR, CSM/CSR, (G)(E)CO, EPM/EPDM, EVM, FKM/F(E)PM, GPO, IR, IIR, (F)(P)(V)MQ, (H)NBR, NR, SBR, SAN, SEBS, ABS, PE, PEEK, PEI, PET, PI, PP, PU, PVC, or any mixtures thereof.

The intumescent agent may be comprised of, but not limited to expandable graphite, melamine or melamine compounds, phosphates or polyphosphates, in any combinations with blowing agent, and any mixtures thereof. Preferred is expandable graphite.

Layer (A) may comprise fillers of organic or inorganic nature, such as carbon black, graphite, metal oxides, carbonates, hydroxides, silica(te)s, and so on. The fillers can be used for reinforcing the polymer and therefore improving the mechanical strength, but also as dispersion aid when blending the intumescent material into the polymer matrix.

Layer (A) may furthermore comprise additives, such as plasticizers, emulsifiers, pigments or dyes, for modifying the processing, performance or aspect of layer (A).

Layer (A) may furthermore comprise flame retardant agents, such as, but not limited to halogen compounds, phosphorous compounds, hydrates etc. and/or char forming agents.

The thickness of layer (A) is 0.1 to 5 mm, preferably 0.2 to 3 mm, especially preferred 0.4 to 1.5 mm.

Layer (A) may also comprise adhesion promoters to facilitate direct chemical adhesion to layer (B).

Layer (A) may show surface structures, such as ribs, knobs etc. for functional, e.g. flame dispersion or acoustic decoupling, or decorative purpose.

The claimed material furthermore comprises at least one layer (B), see fig. 1, which is a scrim based layer and acting as a reinforcement and interface between layer (A) and layer (C), means, it is the second outermost layer. The scrim of layer (B) comprises at least one layer of fibrous material in woven or nonwoven form, preferably woven (fabric), such as, but not limited to fabrics with stain, twill or linen weave. Especially preferred are fabrics with linen weave. To achieve good barrier and reinforcement properties the scrim shows a weight of 25 to 500 g/m², preferably 35 to 400 g/m², especially preferred 45 to 300 g/m², and the number of fibres or filaments per centimeter is 3 to 75, preferably 4 to 55, especially preferred 5 to 25. The fibrous material may comprise massive or hollow fibres, such as, but not limited to sisal, hemp, coconut fibre, cellulose, cotton, bamboo fibre, carbon fibre, polyester, polyacrylic, polyaramide, polyimide, PTFE, glass fibre, ceramic fibre, mineral fibre, metal fibre etc. Preferred are non-combustible fibres, like glass fibre, ceramic fibre or mineral fibre, especially preferred are glass fibres with inorganic -i.e. non-combustible- treatment, such as, but not limited to silanes.

Layer (B) may be bond to layers (A) and/or (C) by adhesives -reactive or as hot melts-, preferably flame retardant ones, such as, but not limited to chloroprene or CM based materials, and/or inorganic ones, such as, but not limited to silicate glue. Layer (A) and/or layer (C) may be connected to layer (B) by diluting or melting the layer materials, followed by coating, lamination, brushing, spraying or dip-coating; or by calandering/co-calandering, co-extrusion, lamination or overmoulding of the non-diluted materials.

The claimed material furthermore comprises at least one layer (C), see fig. 1, as third outermost layer which is the inner counterpart of layer (A) and has to close the pores of layer (B) in case of fire. Layer (C) may comprise at least the same essential components of layer (A) -i.e. polymer and intumescent agent- or may be comprised of a polymeric matrix or binder and solely char forming, but not intumescent agents. In the latter case, the solely char forming agent is not particularly limited and may be selected from red phosphorous, (poly)phosphates and melamine compounds. The binder may be a resin usually used for this purpose, such as an acrylate, epoxy resin, polyurethane resin or polyester resin. Preferred, however, is a composition comprising polymeric matrix and intumescent agents.

Layer (C) shows a thickness of 0.1 to 5 mm, preferably 0.2 to 3 mm, especially preferred 0.4 to 1.5 mm.

Layer (A) and/or layer (B) and/or layer (C) can also be connected to each other in any process step and can also prepared as a prefabricated composite laminate and then be applied onto the expanded material (D). Layer (C) as the innermost layer may be bond to the expanded material (D) by adhesives -reactive or as hot melts-, preferably flame retardant ones, such as, but not limited to chloroprene or CM based materials, and/or inorganic ones, such as, but not limited to silicate glue.

The layers (A) and (C) are separated by maximum 0-1.5 mm of scrim layer especially preferred by 0-1.0 mm. They may be in direct contact, i.e. adhere to each other through the meshes of the scrim.

The claimed material furthermore comprises at least one layer (D), see fig. 1, of expanded elastomer and/or thermoplastic elastomer based material. The polymer in (D) may be based on, but not limited to ACM/AEM, AU/EU, BR, BIIR, CIIR, CM/CR, CSM/CSR, (G)(E)CO, EPM/EPDM, EVM, FKM/F(E)PM, GPO, IR, IIR, (F)(P)(V)MQ, (H)NBR, NR, SBR, SAN, SEBS, PU, PVC, or any mixtures thereof.

The expanded elastomer or thermoplastic elastomer based material of (D) may comprise a crosslinking system, such as peroxides, hydrosilylation or silane coupling agents, radiation activators (for radiation or UV curing), sulphur compounds and respective accelerators, bisphenolics, metal oxides, or any mixtures thereof.

The expanded elastomer or thermoplastic elastomer material furthermore comprises at least one expansion system chosen from the classes of chemical expansion agents (e.g. releasing carbon dioxide, nitrogen, oxygen, hydrogen or vapour) and/or physical expansion agents (e.g. solvents, CO₂, N₂ etc.).

The elastomer or thermoplastic elastomer material may be expanded to a closed or open cell foam or sponge forming (D). Preferred is closed cell foam with a closed cell content of at least 60% and a density of less than 300 kg/m³, preferably less than 200 kg/m³, especially preferred less than 150 kg/m³ according to ISO 845, and with a thermal conductivity of less than 0.100 W/m*K at 0 °C, preferably less than 0.050 W/m*K at 0 °C according to EN 12667. Layer (D) being an elastomeric polymer based material shows good water vapour diffusion barrier properties of at least µ 2000, preferably at least µ 3500, especially preferred at least µ 5000, according to EN 12086.

The elastomer or thermoplastic elastomer material furthermore may comprise at least one filler of mineral and/or synthetic nature; the elastomer or thermoplastic elastomer material furthermore may comprise a heat and/or reversion and/or weathering stabilizer system and/or all kinds of other fillers or additives, such as other elastomers, thermoplastic elastomers and/or thermoplastics and/or thermoset based polymer mixtures, or combinations thereof, or as recycled material, other recycled polymer based materials, fibres etc.

The elastomer or thermoplastic elastomer material may comprise further additives such as flame retardants, biocides, plasticizers, colours etc., of any kind in any ratio, including additives for improving its manufacturing, application, aspect and performance properties, such as inhibitors, retarders, etc.; and/or additives for adapting it to the applications' needs, such as char-forming and/or intumescent additives and/or substances that will lead to a self-ceramifying effect in case of fire, such as boron compounds, silicon containing compounds etc.; and/or internal adhesion promoters to ensure self-adhesive properties in co-extrusion and co-lamination applications, such as silicate esters, functional silanes, polyols, etc.

The claimed material may furthermore comprise further layers (E), see fig. 1, which may be applied underneath material (D) or on top of layer (A), such as self-adhesive transfer foils, decorative layers etc.

The composite layer comprising (A), (B) and (C) can be applied onto material (D) in a way that one or more overlaps are formed which can be used as seam seal and/or butt joint. The respective overlaps can be adhered by adhesives, preferably of low or no combustibility, or adhere by themselves, or fit mechanically, or can be thermally welded by melting the polymer matrix in case of thermoplasts are used in layer (A) and/or (C). This lap seal is e.g. applicable for sealing and stabilizing insulated installations.

The claimed material furthermore may comprise any further element (F) necessary for the intended application, such as wire inlays in case of cables or the like, massive parts such as wood, glass, metal or concrete structures for building purposes etc., and also metal pipes, e.g. from corrugated steel or copper, to make a pre-insulated pipe.

A major advantage of the claimed material is the versatility of fire (and smoke) protection resulting from the interaction of the layered system in case of fire: Layer (A) will show spontaneous expansion and thus will provide thermal insulation during fire attack. Additionally, layer (A) will expand into the scrim layer (B) and close possible porosity. Layer (A) and (B) will therefore form a unified char, and layer (A) together with layer (B) will form a permanently dense flame shield. To obtain this it is not essentially required that the material of (A) is penetrating through the openings of (B) or into the fibres of (B), but at least good chemical adhesion of the two layers needs to be provided.

Heat penetrating through the expanded layer (A) is transversally dispersed by layer (B) and thus heat transfer to layer (C) or even layer (D) is slowed down. However, the main function of layer (B) is to reinforce and hold the entire composite together: Organic materials do not burn themselves, but will decompose when being exposed to heat and form combustible gases. These gases are kept away from the flame of the fire in the case of the present invention, however - no matter how well expanded layer (A) and how efficiently heat dispersing layer (B) may function - they will be formed from at least layer (D) to a certain extent and put pressure on the outer layers. The carbonized composite of (A)/(B) will maintain the entire structure in its shape so that no ruptures could occur leading to flame breakthrough, or better: breakthrough of combustible gases igniting. Layer (C) has an additional char forming function, means, will reinforce the (A)/(B) composite from the inside, but will also act as a buffer for combustible gases which will be absorbed by the char and/or intumescent foam of (C); and will seal layer (D) from air (oxygen) contact to facilitate the formation of carbonized matter from (D).

Layer (D) itself is contributing to the general performance of the composite by char formation: as it is sealed from air only incomplete combustion can take place leading to carbonization of the organic matrix. This char in almost non-combustible under the conditions provided by the composite of the present invention. This means, that the matrix of layer (D) only needs to contain a sufficient portion of carbon content, i.e. is organic, and the flame protection effect is secured. As a proof, various expanded organic materials have shown good to excellent results in fire tests when being applied as layer (D) according to the present invention, see table 3.

Means, it is a subsequent advantage of the claimed material that its fire performance is almost independent from expanded material of layer (D); and that no additional measures have to be taken to render the composite fire retardant, i.e., its fire retardancy is inherent.

It is a linked advantage of the claimed material that halogen free organic expanded materials can be used for layer (D) and therefore entirely halogen free highly fire protected composites are feasible if layers (A) and (B) and possibly applied adhesives are free of halogens, too. Such materials are very looked after for the construction of ships, railway vehicles etc. and for ecologic and safety related construction in general.

A further advantage of the claimed material is the fact that the manufacturer or the applicant has almost free - economic as well as ecologic - choice for the expanded material of layer (D) and its ingredients. Means, the claimed material can be composed in a way that it is free of substances being discussed for environmental and health issues, like PVC, phthalates, antimony etc.

A further advantage of the claimed material is that its flame retardancy is independent from the geometry of the part to be fire protected as long as the composite structure is represented over the part's entire surface.

It is a further advantage of the claimed material that the right choice of scrim (e.g. light twill weave) will allow the composite to be bent around narrow radius and to maintain a big part of the flexibility of the expanded material of layer (D).

It is a further advantage of the claimed material that it can be manufactured, transformed and given shape by methods being well known and practised in the industry and that it does not require special equipment.

It is another advantage of the claimed material that the outer layers (A),(B),(C) provide additional beneficial properties, such as vapour diffusion blocking (vapour barrier properties are essential to prevent corrosion under insulation through condensation of humidity), sound barrier function and mechanical protection.

As an example, the layer composites A-J of table 2 will increase the water vapour diffusion barrier according to EN 12086 by 20 to 100%, means a plus in µ value of 2000 to 10000. The additional noise reduction on top of the performance of layer (D) varies around 10 to 15 dB, depending on the specific gravity of the layer composite (A),(B),(C). Additionally, the heavy foil layers (A) and (C) will reduce and/or decouple structure borne noise.

The tensile strength and tear resistance of the claimed composite is extremely high which makes it very tolerant in application; cutting is possible, but puncturing is prevented. Therefore the claimed material is resistant against mechanical load, pressure, notch formation, piercing and bites, including attack by birds, rodents or termites or the like, which is another advantage for outdoor application purposes, together with the high UV and ozone - or general weathering - resistance.

It is a further advantage of the claimed material that any of the layers (A), (B) or (C) can be applied on expanded material (D) by creating overlaps which allow full and easy sealing (e.g. by heat welding) of seams between parts made from the claimed material which leads to complete retention of all a.m. properties.

Finally, it is a major advantage of the claimed material that its fire (and smoke creation) protective performance is highly rated independently from the test method applied (see table 3). The protection layer composite (A)(B)(C), see J of table 2, even reached an A2 rating according to EN 13501-1, which means classification as "non-combustible".

### Examples

In the following examples and comparative examples the expanded elastomer materials and other materials, like glass tissue, were acquired on the market. The layers (A) and (C) were put on the foam parts by pressure using adhesives (Kaiflex® Kleber 414, Kaimann GmbH, Germany) or alternatively acrylate adhesive transfer foil (ATP, Germany).

**Table 1: compositions of foils layers (A) and (C); numbers are in weight-%**

| | **Polymer 1 EVA45** | **Polymer 2 EVA60** | **Plastisizer** | **Expandable graphite** | **APP** |
|---|---|---|---|---|---|
| **1** | - | 30 | 5 | 65 | - |
| **2** | - | 30 | 5 | 50 | 15 |
| **3** | - | 40 | - | - | 60 |
| **4** | 15 | 15 | - | - | 70 |

| | | | | | |
|---|---|---|---|---|---|
| Manufacturers: Polymer: EVA 45 Type and 60 Type, DuPont, U.S.A.; Expandable Graphite (intumescent additive): 150 Type, AMG Mining, Germany; Plastisizer: Risella 917, Shell, The Netherlands; APP (char formation additive): FR CROS 484, Budenheim, Germany. | | | | | |

**Table 2: examples of composites and comparative examples**

| | **Material of (A); see table 1** | **Material of (C); see table 1** | **Material of (D)** |
|---|---|---|---|
| **A** | 1 | 1 | AF/Armaflex® |
| **B** | 1 | 1 | Kaiflex® ST |
| **C** | 1 | 1 | Kaiflex® KKplus s2 |
| **D** | 1 | 1 | Kaiflex® BluEco® |
| **E** | 1 | 2 | Kaiflex® EF-E |
| **F** | 1 | 3 | Kaiflex® ST |
| **G** | 1 | 4 | Kaiflex® ST |
| **H*** | 3 | 1 | Kaiflex® ST |
| **I*** | 3 | 3 | Kaiflex® ST |
| **J*** | 1 | 1 | - |
| **K*** | 1 | - | Kaiflex® ST |
| **L*** | - | 1 | Kaiflex® ST |

| | | | |
|---|---|---|---|
| All materials for (D) were 13 mm sheets. Manufacturers: AF/Armaflex®, Armacell, Germany; all Kaiflex® materials: Kaimann GmbH, Germany. Material for (B) was silane coated glass fibre in linen weave, 10x7 filaments. *comparative examples | | | |

**Table 3: classification results of flammability and smoke creation tests of examples and comparative examples**

| | **EN 13501-1 / EN 13823** | **ASTM E-84 / NFPA** |
|---|---|---|
| **AF/Armaflex®*** | B-s3, d0** | 25/50 (A rating)*** |
| **Kaiflex® ST*** | B-s3, d0 | 25/50 (A rating) |
| **Kaiflex® KKplus s2*** | B-s2, d0 | 25/50 (A rating) |
| **Kaiflex® BluEco®*** | D-s2, d0 | - |
| **Kaiflex® EF-E*** | E (s3, d0) | 50/150 (B rating) |
| **A** | B-s1, d0 | - |
| **B** | B-s1, d0 | 25/50 (A rating) |
| **C** | B-s1, d0 | - |
| **D** | B-s1, d0 | - |
| **E** | B-s2, d0 | 25/50 (A rating) |
| **F** | B-s1, d0 | - |
| **G** | B-s2, d0 | - |
| **H*** | C-s2, d0 | - |
| **I*** | D-s3, d0 | 75/250 (C rating) |
| **J*** | B-s1, d0 / A2¹⁾ | - |
| **K*** | D-s3, d0 | 75/200 (C rating) |
| **L*** | D-s2, d0 | - |

| | | |
|---|---|---|
| *comparative examples; - = not tested; ** = according to manufacturer's literature: *** = for AP/Armaflex®, related material, according to manufacturer's literature ¹⁾ A2 according to ISO 1716 and EN 13823. | | |

## Claims

1. A material comprising at least four layers (A), (B), (C) and (D) in this order, wherein:
the first (outer) layer (A) has a thickness of 0.1 to 5 mm, preferably 0.2 to 3 mm, especially preferred 0.4 to 1.5 mm and comprises:
- at least 10 weight percent, preferably at least 20 weight percent of at least one of an elastomer, a thermoplastic elastomer and a thermoplastic polymer; and
- at least 30 weight percent, preferably at least 50 weight percent of at least one intumescent agent;
the second layer (B) comprises at least one scrim layer of fibrous material in woven or nonwoven form, preferably woven (fabric), acting as a reinforcement and interface between layer (A) and the subsequent layer (C);
the third layer (C) has a thickness of 0.1 to 5 mm, preferably 0.2 to 3 mm, especially preferred 0.4 to 1.5 mm, and comprises:
- at least one of an elastomer, a thermoplastic elastomer and a thermoplastic polymer and at least one of an intumescent agent and a char forming agent; or
- a binder and a char forming agent; and
the fourth (inner) layer (D) is comprised of an elastomer or thermoplastic elastomer being expanded to a closed or open cell foam or sponge showing density of less than 300 kg/m³, preferably less than 200 kg/m³, especially preferred less than 150 kg/m³ according to ISO 845, and with a thermal conductivity of less than 0.100 W/m*K at 0 °C, preferably less than 0.050 W/m*K at 0 °C according to EN 12667.

2. The material according to claim 1 wherein (D) is comprising closed cell foam with a closed cell content of at least 60% and water vapour diffusion barrier properties of at least µ 2000, preferably at least µ 3500, especially preferred at least µ 5000, according to EN 12086.

3. The material according to claim 1 or 2 wherein the intumescent agent shows an expansion or gas potential of at least 20 ml/g, preferably at least 50 ml/g, especially preferred at least 75 ml/g.

4. The material according to any of claims 1-3 wherein the particle size of the intumescent agent is at least 10 micron, preferably at least 30 micron, especially preferred at least 50 micron (volume average, measured by laser diffraction).

5. The material according to any of claims 1-4 wherein the maximum expansion velocity of the intumescent agent is found at temperatures of 180°C or higher and/or the expansion ratio after 30 seconds at 280°C is at least 3:1 (means e.g. 3 mm if the initial thickness had been 1 mm), preferably at least 6:1.

6. The material according to any of claims 1-5 wherein the intumescent material is expandable graphite.

7. The material according to any of claims 1-6 wherein the scrim of layer (B) comprises at least one layer of fabric with stain, twill or linen weave, preferably linen weave.

8. The material according to any of claims 1-7 wherein the scrim shows a weight of 25 to 500 g/m², preferably 35 to 400 g/m², especially preferred 45 to 300 g/m², and wherein the number of fibres or filaments per centimetre is 3 to 75, preferably 4 to 55, especially preferred 5 to 25.

9. The material according to any of claims 1-8 wherein the fibre material is non-combustible, preferably of glass, metal or ceramic; especially preferred is glass fibre.

10. The material according to any of claims 1-9 wherein the layers (A) and (C) are separated by maximum 0-1.5 mm of scrim layer, especially preferred by 0-1.0 mm.

11. The material according to any of claims 1-10 wherein at least the layers (A), (B) and (C) are free of halogens, and where preferably the entire composite is free of halogens.

12. The process for manufacturing the material according to any of claims 1-11 in a continuous process, preferably by two-step-extrusion/expansion and co-lamination, preferably by a prefabricated composite of at least (A) and (B) being laminated onto (C) and (D) or where a prefabricated composite of (A), (B) and (C) is being laminated onto (D).

13. The use of a material according to any of claims 1-12 for thermal and/or acoustic insulation and/or acoustic and/or vibration damping insulation and/or fire protection insulation in indoor and outdoor applications.

## Patentansprüche

1. Material, umfassend mindestens vier Schichten (A), (B), (C) und (D) in dieser Reihenfolge, wobei:
die erste (äußere) Schicht (A) eine Dicke von 0,1 bis 5 mm, vorzugsweise 0,2 bis 3 mm, besonders bevorzugt 0,4 bis 1,5 mm aufweist und folgendes umfasst:
- mindestens 10 Gewichtsprozent, vorzugsweise mindestens 20 Gewichtsprozent von mindestens einem aus einem Elastomer, einem thermoplastischen Elastomer und einem thermoplastischen Polymer; und
- mindestens 30 Gewichtsprozent, vorzugsweise mindestens 50 Gewichtsprozent von mindestens einem Intumeszenzmittel;
die zweite Schicht (B) mindestens eine Gitterstoffschicht aus faserförmigem Material in gewebter oder Vliesform, vorzugsweise gewebt (Gewebe), umfasst, die als Verstärkung und Grenzfläche zwischen Schicht (A) und der nachfolgenden Schicht (C) fungiert;
die dritte Schicht (C) eine Dicke von 0,1 bis 5 mm, vorzugsweise 0,2 bis 3 mm, besonders bevorzugt 0,4 bis 1,5 mm aufweist und folgendes umfasst:
- mindestens eines aus einem Elastomer, einem thermoplastischen Elastomer und einem thermoplastischen Polymer und mindestens eines aus einem Intumeszenzmittel und einem Kohle-bildenden Mittel; oder
- ein Bindemittel und ein Kohle-bildendes Mittel; und
die vierte (innere) Schicht (D) ein Elastomer oder thermoplastisches Elastomer umfasst, welches zu einem geschlossen- oder offenzelligen Schaum oder Schwamm expandiert ist, der eine Dichte von weniger als 300 kg/m³, vorzugsweise weniger als 200 kg/m³, besonders bevorzugt weniger als 150 kg/m³ gemäß ISO 845, und eine Wärmeleitfähigkeit von weniger als 0,100 W/m*K bei 0 °C, vorzugsweise weniger als 0,050 W/m*K bei 0 °C gemäß EN 12667, aufweist.

2. Material gemäß Anspruch 1, wobei (D) geschlossenzelligen Schaum mit einem geschlossenzelligen Gehalt von mindestens 60% und Wasserdampfdiffusionsbarriere-Eigenschaften von mindestens µ 2000, vorzugsweise mindestens µ 3500, besonders bevorzugt mindestens µ 5000, gemäß EN 12086, umfasst.

3. Material gemäß Anspruch 1 oder 2, wobei das Intumeszenzmittel eine Expansion oder ein Gaspotential von mindestens 20 mL/g, vorzugsweise mindestens 50 mL/g, besonders bevorzugt mindestens 75 mL/g, aufweist.

4. Material gemäß mindestens einem der Ansprüche 1 - 3, wobei die Teilchengröße des Intumeszensmittels mindestens 10 Mikrometer, vorzugsweise mindestens 30 Mikrometer, besonders bevorzugt mindestens 50 Mikrometer, beträgt (Volumen-Durchschnitt, gemessen durch Laserbeugung).

5. Material gemäß mindestens einem der Ansprüche 1 - 4, wobei die maximale Expansionsgeschwindigkeit des Intumeszenzmittels bei Temperaturen von 180 °C oder höher liegt und/oder das Expansionsverhältnis nach 30 Sekunden bei 280 °C mindestens 3:1 (bedeutet z.B. 3 mm, wenn die Anfangsdicke 1 mm betrug), vorzugsweise mindestens 6:1, beträgt.

6. Material gemäß mindestens einem der Ansprüche 1 - 5, wobei das Intumeszenzsmittel expandierbarer Graphit ist.

7. Material gemäß mindestens einem der Ansprüche 1 - 6, wobei der Gitterstoff von Schicht (B) mindestens eine Schicht eines Gewebes mit Beiz-, Köper- oder Leinenwebstruktur, vorzugsweise Leinenwebstruktur, umfasst.

8. Material gemäß mindestens einem der Ansprüche 1 - 7, wobei der Gitterstoff ein Gewicht von 25 bis 500 g/m², vorzugsweise 35 bis 400 g/m², besonders bevorzugt 45 bis 300 g/m², aufweist und wobei die Anzahl an Fasern oder Filamenten pro Zentimeter 3 bis 75, vorzugsweise 4 bis 55, besonders bevorzugt 5 bis 25, beträgt.

9. Material gemäß mindestens einem der Ansprüche 1 - 8, wobei das Fasermaterial nicht brennbar ist und vorzugsweise aus Glas, Metall oder Keramik, besonders bevorzugt aus Glasfaser ist.

10. Material gemäß mindestens einem der Ansprüche 1 - 9, wobei die Schichten (A) und (C) durch maximal 0-1,5 mm einer Gitterstoffschicht getrennt sind, besonders bevorzugt durch 0-1,0 mm.

11. Material gemäß mindestens einem der Ansprüche 1 - 10, wobei mindestens die Schichten (A), (B) und (C) frei von Halogenen sind, und wobei vorzugsweise das gesamte Verbundmaterial frei von Halogenen ist.

12. Verfahren zur Herstellung des Materials gemäß mindestens einem der Ansprüche 1 - 11 in einem kontinuierlichen Verfahren, vorzugsweise durch zweistufige Extrusion/Expansion und Co-Laminierung, vorzugsweise durch ein vorgefertigtes Verbundmaterial aus mindestens (A) und (B), die auf (C) und (D) laminiert werden oder bei dem ein vorgefertigter Verbundstoff aus (A), (B) und (C) auf (D) laminiert wird.

13. Verwendung eines Materials gemäß mindestens einem der Ansprüche 1 - 12 für thermische und/oder akustische Isolierung und/oder akustische und/oder Vibrationsdämpfungsisolierung und/oder Brandschutzisolierung bei Innen- und Außenanwendungen.

## Revendications

1. Matériau comprenant au moins quatre couches (A), (B), (C) et (D) dans cet ordre, dans lequel :
la première couche (externe) (A) a une épaisseur de 0,1 à 5 mm, de préférence de 0,2 à 3 mm, tout particulièrement de 0,4 à 1,5 mm et comprend :
- au moins 10 pour cent en poids, de préférence au moins 20 pour cent en poids d'au moins l'un d'un élastomère, d'un élastomère thermoplastique et d'un polymère thermoplastique ; et
- au moins 30 pour cent en poids, de préférence au moins 50 pour cent en poids d'au moins un agent intumescent ;
la deuxième couche (B) comprend au moins une couche de mousseline de matériau fibreux sous forme tissée ou non tissée, de préférence sous forme tissée (tissu), agissant comme renfort et interface entre la couche (A) et la couche ultérieure (C) ;
la troisième couche (C) a une épaisseur de 0,1 à 5 mm, de préférence de 0,2 à 3 mm, tout particulièrement de 0,4 à 1,5 mm et comprend :
- au moins l'un d'un élastomère, d'un élastomère thermoplastique et d'un polymère thermoplastique et au moins l'un d'un agent intumescent et d'un agent formateur de résidu charbonneux ; ou
- un liant et un agent formateur de résidu charbonneux ; et
la quatrième couche (interne) (D) est constituée d'un élastomère ou d'un élastomère thermoplastique qui est expansé pour former une mousse ou une éponge à cellules fermées ou ouvertes présentant une masse volumique de moins de 300 kg/m³, de préférence de moins de 200 kg/m³, mieux encore de moins de 150 kg/m³ selon la norme ISO 845 et avec une conductibilité thermique de moins de 0,100 W/m*K à 0 °C, de préférence de moins de 0,050 W/m*K à 0 °C selon la norme EN 12667.

2. Matériau selon la revendication 1, dans lequel (D) comprend de la mousse à cellules fermées avec une teneur en cellules fermées d'au moins 60 % et des propriétés de barrière à la diffusion de vapeur d'eau d'au moins 2 000 µm, de préférence d'au moins 3 500 µm, mieux encore d'au moins 5 000 µm selon la norme EN 12086.

3. Matériau selon la revendication 1 ou 2, dans lequel l'agent intumescent montre une expansion ou un potentiel gazeux d'au moins 20 ml/g, de préférence d'au moins 50 ml/g, mieux encore d'au moins 75 ml/g.

4. Matériau selon l'une quelconque des revendications 1 à 3, dans lequel la taille particulaire de l'agent intumescent est d'au moins 10 micromètres, de préférence d'au moins 30 micromètres, mieux encore d'au moins 50 micromètres (volume moyen mesuré par diffraction au laser).

5. Matériau selon l'une quelconque des revendications 1 à 4, dans lequel la vitesse d'expansion maximale de l'agent intumescent est trouvée aux températures de 180 °C ou plus et/ou le taux d'expansion après 30 secondes à 280 °C est d'au moins 3:1 (par exemple 3 mm si l'épaisseur initiale a été de 1 mm), de préférence d'au moins 6:1.

6. Matériau selon l'une quelconque des revendications 1 à 5, dans lequel le matériau intumescent est du graphite expansible.

7. Matériau selon l'une quelconque des revendications 1 à 6, dans lequel la mousseline de la couche (B) comprend au moins une couche de tissu avec une armure colorée, une armure sergée ou une armure toile, de préférence une armure toile.

8. Matériau selon l'une quelconque des revendications 1 à 7, dans lequel la mousseline présente un poids de 25 à 500 g/m², de préférence de 35 à 400 g/m², mieux encore de 45 à 300 g/m², et dans lequel le nombre de fibres ou de filaments par centimètre est de 3 à 75, de préférence de 4 à 55, mieux encore de 5 à 25.

9. Matériau selon l'une quelconque des revendications 1 à 8, dans lequel le matériau fibreux est non combustible, de préférence du verre, un métal ou une céramique ; mieux encore des fibres de verre.

10. Matériau selon l'une quelconque des revendications 1 à 9, dans lequel les couches (A) et (C) sont séparées par au maximum 0 à 1,5 mm de couche de mousseline, mieux encore de 0 à 1,0 mm.

11. Matériau selon l'une quelconque des revendications 1 à 10, dans lequel au moins les couches (A), (B) et (C) sont exemptes d'halogènes et, lorsque cela s'avère préférable, la totalité du composite est exempte d'halogènes.

12. Procédé de fabrication du matériau selon l'une quelconque des revendications 1 à 11 dans un procédé continu, de préférence par extrusion/expansion et co-laminage en deux étapes, de préférence par un composite préfabriqué d'au moins (A) et (B) laminés sur (C) et (D) ou lorsqu'un composite préfabriqué de (A), (B) et (C) est laminé sur (D).

13. Utilisation d'un matériau selon l'une quelconque des revendications 1 à 12 pour un isolement thermique et/ou acoustique et/ou un isolement acoustique et/ou un amortissement de vibrations et/ou un isolement de protection contre les incendies dans des applications internes et externes.
